# EUROPÄISCHE PATENTANMELDUNG

(11) **EP 0 713 055 A2**
(43) Veröffentlichungstag der Anmeldung: **22.05.1996**
(21) Anmeldenummer: 95117420.0
(22) Anmeldetag: 06.11.1995
(51) Int. Cl.: F23G 5/50, F23G 5/027

(54) **Kraftwerk mit einer Gasturbine**

(30) Priorität: 17.11.1994 DE 4440984
(71) Anmelder: SIEMENS AKTIENGESELLSCHAFT, D-80333 München (DE)
(72) Erfinder: Berwein, Heinz-Jürgen, Dipl.-Ing., D-91315 Höchstadt (DE); Woellert, Jürgen, Dipl.-Ing., D-91056 Erlangen (DE); Wiehn, Georg, Dr., D-91058 Weisendorf (DE)

(57) **Zusammenfassung**

Die Erfindung betrifft ein Kraftwerk mit einer Gasturbine (5), von der an einem Abgasauslaß (6) eine Abgasleitung (7) ausgeht, die in den Primärraum eines Wärmetauschers (8) mündet. Der Sekundärkreis dieses Wärmetauschers (8), der Wasser/Dampf enthält, ist mit einer Dampfturbine (13) verbunden (GUD-Kraftwerk).Es ist vorgesehen, daß vom Abgasauslaß (6) der Gasturbine (5) eine Zweigleitung (30) ausgeht, die mit einer Wärmesenke einer Abfallentsorgungsanlage in Verbindung steht. Außerdem ist vorgesehen, daß mit einer Wärmequelle der Abfallentsorgungsanlage über eine Ableitung (34) die Dampfturbine (13) in Verbindung steht.

## Beschreibung

Die Erfindung betrifft ein Kraftwerk mit einer Gasturbine, von der an einem Abgasauslaß eine Abgasleitung ausgeht, die in den Primärraum eines Wärmetauschers mündet, dessen Sekundärkreis, der Wasser/Dampf enthält, mit einer Dampfturbine verbunden ist (GUD-Kraftwerk).

Aus der DE 41 26 038 A1 ist ein Kraftwerk bekannt, das eine Gasturbine umfaßt. Dieser Gasturbine werden ein Brennstoff, insbesondere Erdgas, und Luft zugeleitet. Mit der Gasturbine ist ein Generator verbunden. Von einem Abgasauslaß der Gasturbine geht eine Abgasleitung aus, die in den Primärraum eines Wärmetauschers mündet, dessen Sekundärkreis, der Wasser/Dampf enthält, mit einer Dampfturbine verbunden ist. Dabei wird die Dampfturbine durch den im Sekundärkreis des Wäremtauschers erzeugten Dampf angetrieben.

Aus der EP 0 302 310 B1 ist eine Anlage zur thermischen Abfallentsorgung bekannt, die einen Pyrolysereaktor (Schweltrommel) enthält, in den der zu entsorgende Abfall eingebracht wird. Zur Beheizung dieser Schweltrommel muß ein Heizgas bereitgestellt werden, das beispielsweise durch in der Schweltrommel angeordnete Heizrohre geführt wird. In der Schweltrommel wird der Abfall in Schwelgas und Pyrolysereststoff umgewandelt. Das Schwelgas gelangt dann direkt in eine Brennkammer. Der Pyrolysereststoff wird sortiert und es gelangt nur ein brennbarer Anteil in die Brennkammer. Von der Brennkammer werden eine schmelzflüssige Schlacke und ein Rauchgas abgegeben. Dieses gelangt in eine Abhitzedampferzeuger-Anlage. Mit dem dort erzeugten Dampf kann ein Dampfkraftwerk gespeist werden.

Aus der DE 37 28 487 C2 ist zu entnehmen, daß in einer Brennkammer entstandenes Rauchgas zur Beheizung einer Schweltrommel herangezogen werden kann, in der Abfall verschwelt werden soll. Das Rauchgas kann auch zur Dampferzeugung in einem Dampferzeuger verwendet werden, wobei der Dampf zum Antrieb einer Dampfturbine dienen kann.

Der Erfindung lag die Aufgabe zugrunde, ein Kraftwerk anzugeben, das einerseits Abfall thermisch entsorgen kann und andererseits mit hohem Gesamtwirkungsgrad elektrische Energie und gegebenenfalls Fernwärme bereitstellen kann.

Diese Aufgabe wird gemäß der Erfindung dadurch gelöst, daß eine Zweigleitung, die vom Abgasauslaß ausgeht, mit einer Wärmesenke einer Abfallentsorgungsanlage in Verbindung steht und daß mit einer Wärmequelle der Abfallentsorgungsanlage über eine Ableitung die Dampfturbine in Verbindung steht.

Das Kraftwerk nach der Erfindung ist an zwei Stellen mit einer Abfallentsorgungsanlage verbunden. Einerseits wird ein Teil des heißen Abgases, das die Gasturbine des Kraftwerkes abgibt, in der Abfallentsorgungsanlage genutzt. Andererseits wird in der Abfallentsorgungsanlage Dampf erzeugt, der neben dem im Kraftwerk erzeugten Dampf die Dampfturbine des Kraftwerkes antreibt. Durch diese zweifache Koppelung des Kraftwerkes nach der Erfindung mit einer Abfallentsorgungsanlage wird vorteilhafterweise ein hoher Gesamtwirkungsgrad erzielt.

Der größte Teil der in der Abfallentsorgungsanlage erzeugten Wärmeenergie wird dem Kraftwerk zugeführt. Das geschieht, indem in der Abfallentsorgungsanlage erzeugter Dampf der Dampfturbine des Kraftwerkes zugeleitet wird. Dadurch erreicht man im Kraftwerk vorteilhafterweise eine hohe Energieausbeute bei der Elektrizitätserzeugung.

Beispielsweise ist die Zweigleitung, die Abgase der Gasturbine aufnimmt, mit einer Einrichtung zur Beheizung einer Entgasungsstufe oder Trocknungsstufe verbunden, die Bestandteile einer Abfallentsorgungsanlage sind.

Mit der Zweigleitung sind z.B. Heizrohre einer Schweltrommel verbunden. Diese Heizrohre können im Inneren einer als solchen bekannten Schweltrommel angeordnet sein und werden von dem heißen Abgas durchströmt. Dadurch wird der in die Schweltrommel eingebrachte Abfall indirekt soweit erhitzt, bis ein Schwelprozeß abläuft und Schwelgas und Schwelreststoff entstehen.

Die Ableitung, die der Dampfturbine Dampf zufuhrt, kann beispielsweise vom Sekundärraum eines Wärmetauschers ausgehen, dessen Primärraum mit einer beliebigen thermischen Abfallentsorgungsanlage, z.B. mit einer Rostfeuerungsanlage, verbunden ist.

Insbesondere kann die Ableitung, die der Dampfturbine Dampf zuführt, vom Sekundärraum eines Wärmetauschers ausgehen, dessen Primärraum mit einer Hochtemperatur-Brennkammer verbunden ist, die einer Schweltrommel nachgeschaltet ist.

Die Schweltrommel kann dabei diejenige Schweltrommel sein, deren Heizrohre mit der Zweigleitung verbunden sind. Dann ist das Kraftwerk an zwei Stellen mit einer als solchen bekannten Schwel-Brenn-Anlage gekoppelt.

Vorteilhafterweise kann die Wärmeenergie des von der Hochtemperatur-Brennkammer abgegebenen Rauchgases für die Dampfturbine des Kraftwerkes genutzt werden. Andererseits kann die Wärmeenergie des Abgases der Gasturbine zur Beheizung der Schweltrommel dienen.

Man erzielt vorteilhafterweise einen guten Gesamtwirkungsgrad durch die Koppelung eines GUD-Kraftwerkes mit einer Schwel-Brenn-Anlage.

Beispielsweise können der Sekundärkreis des Wärmetauschers des Kraftwerkes und/oder die von einer Wärmequelle der Abfallentsorgungsanlage ausgehende Ableitung mit einem Fernwärmenetz verbunden sein. Damit wird der Vorteil erzielt, daß ein Teil des Dampfes oder der gesamte Dampf, der sonst die Dampfturbine antreibt, als Fernwärmeträger verwendet wird.

Die Gasturbine und die Dampfturbine sind in der Regel mit Generatoren verbunden, so daß elektrische Energie bereitgestellt werden kann.

Mit dem Kraftwerk nach der Erfindung wird insbesondere der Vorteil erzielt, daR durch die Ankoppelung einer Abfallentsorgungsanlage je nach Bedarf Wärmeenergie besser ausgenutzt werden kann. Dadurch erreicht man einen besseren Wirkungsgrad.

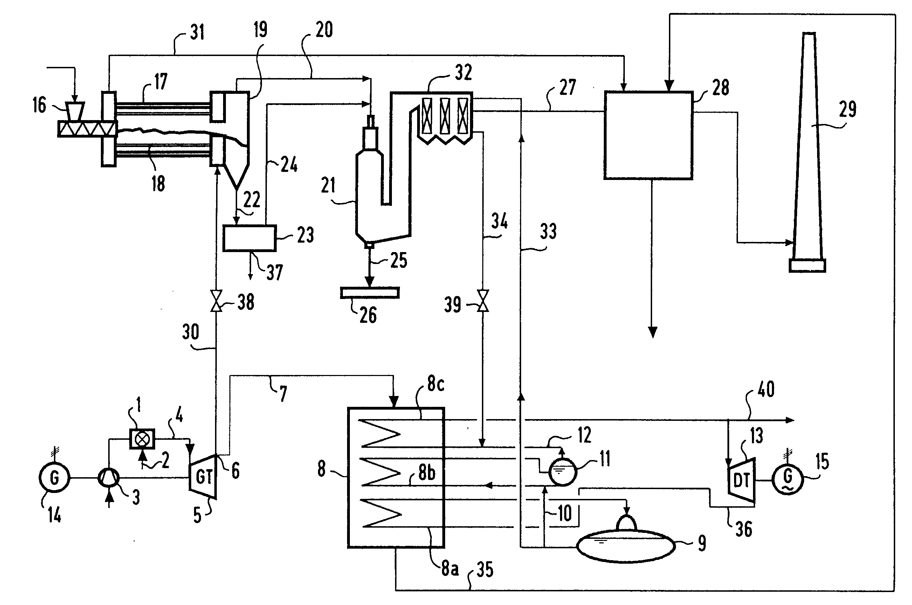

Das Kraftwerk nach der Erfindung wird anhand der Zeichnung näher erläutert:

Das in der Zeichnung gezeigte Kraftwerk vereinigt ein aus der DE 41 26 038 A1 bekanntes Gas- und Dampfturbinen-Kraftwerk mit einer aus der EP 0 302 310 B1 bekannten Schwel-Brenn-Anlage.

Der GUD-Kraftwerksteil weist eine Brennkammer 1 auf, in die eine Brennstoffleitung 2, beispielsweise für Erdgas, einmündet. Zur Luftzufuhr in die Brennkammer 1 ist dieser ein Luftverdichter 3 vorgeschaltet. Das Abgas der Brennkammer 1 gelangt über eine Zuleitung 4 in eine Gasturbine 5. Von einem Abgasauslaß 6 der Gasturbine 5 geht eine Abgasleitung 7 aus, die in den Primärraum eines Wärmetauschers 8 mündet. Von dort führt eine Abgas-Ableitung 35 über eine Rauchgasreinigungsvorrichtung 28 zu einem Kamin 29. Den Sekundärraum des Wärmetauschers 8 bilden drei hintereinander geschaltete Rohrsysteme 8a-c für Kondensat, Wasser und Dampf. Im ersten Rohrsystem 8a wird Kondensat vorgewärmt und in einen Speisewasserbehälter 9 eingebracht, in dem sich bereits ein Wasservorrat befindet. Eine Speisewasserleitung 10 führt vom Speisewasserbehälter 9 in das zweite Rohrsystem 8b, in dem Dampf erzeugt wird. In das zweite Rohrsystem 8b ist ein Wasser-Dampf-Trenngefäß 11 eingebunden. Von dort führt eine Dampfleitung 12 über das dritte Rohrsystem 8c zu einer Dampfturbine 13. In der Dampfturbine 13 anfallendes Kondensat gelangt über eine Kondensatleitung 36 zum ersten Rohrsystem 8a. Sowohl mit der Gasturbine 5 als auch mit der Dampfturbine 13 sind Generatoren 14, 15 zur Erzeugung elektrischer Energie verbunden.

Die aus der EP 0 302 310 B1 bekannte Schwel-Brenn-Anlage besteht aus einer Einspeisevorrichtung 16 für Abfall, der auch Klärschlamm enthalten kann. Die Einspeisevorrichtung 16 mündet in eine Schweltrommel 17, die innen mit Heizrohren 18 ausgestattet ist. An die Schweltrommel 17 ist eine Austragsvorrichtung 19 angeschlossen, von der aus eine Schwelgasleitung 20 zu einer Hochtemperatur-Brennkammer 21 führt. Von der Austragsvorrichtung 19 führt außerdem eine Reststoffleitung 22 in eine Trennvorrichtung 23, von der nur eine kohlenstoffreiche Feinfraktion über eine Leitung 24 in die Hochtemperatur-Brennkammer 21 gelangt. Die groben Bestandteile des Reststoffes werden an einer Abgabeöffnung 37 abgegeben. Von der Hochtemperatur-Brennkammer 21 werden schmelzflüssige Schlacke und Rauchgas abgegeben. Die Schlacke gelangt über eine Leitung 25 in ein Wasserbad 26 und bildet dort Schmelzgranulat. Das Rauchgas gelangt durch eine Rauchgasleitung 27 über eine Rauchgasreinigungsvorrichtung 28 in einen Kamin 29.

Zur Erhöhung des Gesamtwirkungsgrades sind das GUD-Kraftwerk und die Schwel-Brenn-Anlage in der folgenden Weise miteinander verbunden:

Vom Abgasauslaß 6 der Gasturbine 5 geht eine Zweigleitung 30 aus, die in die Heizrohre 18 der Schweltrommel 17 einmündet. In der Zweigleitung 30 kann eine regelbare Armatur 38 angeordnet sein. Der Abfall in der Schweltrommel 17 wird durch das Abgas der Gasturbine 5 indirekt erwärmt. Das in den Heizrohren 18 abgekühlte Heizgas wird über eine Ableitung 31 abgegeben, die in die Rauchgasreinigungsvorrichtung 28 einmünden kann.

Zur zusätzlichen Versorgung der Dampfturbine 13 mit Dampf ist der Hochtemperatur-Brennkammer 21 ein Wärmetauscher 32 nachgeschaltet, dessen Primärseite vom heißen Rauchgas durchströmt wird. Sekundärseitig steht der Wärmetauscher 32 mit der Dampfturbine 13 des GUD-Kraftwerkes in Verbindung. Dazu führt eine Zuleitung 33 vom Speisewasserbehälter 9 zum Wärmetauscher 32 und eine Ableitung 34 führt vom Wärmetauscher 32 über das dritte, dampfführende Rohrsystem 8c des Wärmetauschers 8 zur Dampfturbine 13. In der Ableitung 34 kann eine regelbare Armatur 39 angeordnet sein. Für die Dampfturbine 13 bestimmter Dampf kann in eine Fernwärmeleitung 40 eingespeist werden.

Der Wärmetauscher 32 kann statt der Hochtemperatur-Brennkammer 21 einer beliebigen Abfallentsorgungsanlage nachgeschaltet sein. Er wird dann primärseitig von dort erzeugtem Rauchgas durchströmt.

Die Abgas-Ableitung 35 des Primärkreises des Wärmetauschers 8 kann wie auch die Heizgas-Ableitung 31 der Heizrohre 18 in der Schweltrommel 17 mit der vorhandenen Rauchgasreinigungsvorrichtung 28 der Schwel-Brenn-Anlage in Verbindung stehen. Man kommt dann vorteilhafterweise mit nur einer Rauchgasreinigungsvorrichtung 28 und einem Kamin 29 aus.

Durch die Koppelung von GUD-Kraftwerk und Schwel-Brenn-Anlage wird bei Bedarf im Kraftwerk erzeugte Wärmeenergie in der Schwel-Brenn-Anlage eingesetzt und andererseits wird überschüssige Wärmeenergie der Schwel-Brenn-Anlage im Kraftwerk genutzt. Man erzielt eine zuverlässige Entsorgung von Abfall bei einem hohen energetischen Gesamtwirkungsgrad hinsichtlich der Erzeugung von elektrischer Energie oder von Fernwärme.

## Patentansprüche

1. Kraftwerk mit einer Gasturbine (5), von der an einem Abgasauslaß (6) eine Abgasleitung (7) ausgeht, die in den Primärraum eines Wärmetauschers (8) mündet, dessen Sekundärkreis, der Wasser/Dampf enthält, mit einer Dampfturbine (13) verbunden ist (GUD-Kraftwerk),
**dadurch gekennzeichnet,** daß eine Zweigleitung (30), die vom Abgasauslaß (6) ausgeht, mit einer Wärmesenke eine Abfallentsorgungsanlage in Verbindung steht und daß mit einer Wärmequelle der Abfallentsorgungsanlage über eine Ableitung (34) die Dampfturbine (13) in Verbindung steht.

2. Kraftwerk nach Anspruch 1,
**dadurch gekennzeichnet**, daß die Zweigleitung (30) mit einer Einrichtung zur Beheizung einer Entgasungsstufe oder Trocknungsstufe verbunden ist.

3. Kraftwerk nach einem der Ansprüche 1 oder 2,
**dadurch gekennzeichnet**, daß die Zweigleitung (30) mit Heizrohren (18) einer Schweltrommel (17) verbunden ist.

4. Kraftwerk nach einem der Ansprüche 1 bis 3,
**dadurch gekennzeichnet**, daß die Ableitung (34) vom Sekundärraum eines Wärmetauschers (32) ausgeht, dessen Primärraum mit einer thermischen Abfallentsorgungsanlage verbunden ist.

5. Kraftwerk nach Anspruch 4,
**dadurch gekennzeichnet,** daß der Primärraum des Wärmetauschers (32) mit einer einer Schweltrommel (17) nachgeschalteten Hochtemperatur-Brennkammer (21) verbunden ist.

6. Kraftwerk nach einem der Ansprüche 1 bis 5,
**dadurch gekennzeichnet,** daß der Sekundärkreis des Wärmetauschers (8) und/oder die Ableitung (34) mit einem Fernwärmenetz verbunden sind.
